# EUROPEAN PATENT SPECIFICATION

(11) **EP 2 834 807 B1**
(45) Date of publication and mention of the grant of the patent: **08.02.2017**
(21) Application number: 13860162.0
(22) Date of filing: 06.12.2013
(51) Int. Cl.: G09G 5/36, G06F 1/16, G06F 21/62, G06F 21/84

(54) **AUTHENTICATED RELEASE OF DATA TOWARDS A DEVICE DRIVER**
AUTHENTIFIZIERTE FREIGABE VON DATEN AN EINEN VORRICHTUNGSTREIBER
LIBÉRATION AUTHENTIFIÉE DE DONNÉES VERS UN PILOTE DE DISPOSITIF

(30) Priority: 07.12.2012 GB 201222054; 13.12.2012 GB 201222457; 20.12.2012 GB 201222987; 20.12.2012 GB 201223011; 25.02.2013 GB 201303275; 15.03.2013 US 201361787333 P
(43) Date of publication of application: 11.02.2015
(73) Proprietor: Yota Devices IPR Ltd (VG), Road Town, Tortola VG1110 (VG)
(72) Inventor: MARTYNOV, Vladislav Vladislavovich, Moscow 127495 (RU); TARASENKO, Anton Leonidovich, Saint Petersburg 194356 (RU); CHALYKH, Dmitry Eugenievich, poselok Savensky Arkhangelskaya oblast 164288 (RU); NIKOLAEV, Arseniy Andreevich, Moscow 125445 (RU); ROSLYAKOV, Alexey Vladimirovich, Kolomna 140411 (RU); SAZONOV, Alexey Vyacheslavovich, Ufa 450014 (RU)
(74) Representative: Richardt Patentanwälte PartG mbB
(86) International application number: PCT/RU2013/001097
(87) International publication number: WO 2014/088474

(56) References cited:
- WO-A1-2012/116069
- WO-A2-2012/044201
- WO-A2-2012/044202
- WO-A2-2012/050698
- US-A1- 2005 262 083
- US-A1- 2010 240 402

## Description

### Technical field

The present invention relates to an electronic device and, more particularly, to an electronic device that can control data release towards a display area.

US 2005/262083 A1 describes a method and system for controlling screen focus for files and applications during presentations providing for projection of information in a computer-generated presentation setting and prevention of interruption of a presentation by unwanted computer activity. A list is built of applications and files for which screen access is permitted during the presentation. Upon an indication that the presentation is active, when an application or file is about to obtain screen focus, the list is checked to determine whether access is permitted for the file or application. If the application or file is should not have the focus, execution of an application or opening of a file is blocked, or screen focus is denied to windows generated in conjunction with application or file. The indication that the presentation is active may be the connection of a particular display type (e.g., a projector) or the use of a certain display port.

### Background

Devices with two screens are now making their way to the market. However, operating systems (e.g. Android™, BlackBerry^{™} 10 or iOS^{™}) and/or supporting software frameworks are not adapted to properly support this added screen.

The present invention addresses this shortcoming.

### Summary

The invention is defined in the independent claims 1 and 13.

This summary is provided to introduce a selection of concepts in a simplified form. that are further described below in the Detailed Description. This Summary is not intended to identify key features or essential features of the claimed subject matter, nor is it intended to be used as an aid in determining the scope of the claimed subject matter.

A first aspect of the present invention is directed to a method for authenticating release of data towards a device driver in an electronic device having a main display area comprising. the method comprises storing authentication credentials identifying software applications, executing on the electronic device, that are authorized for a display function manager and receiving a request, from one of the software applications executing on the electronic device, for sending data towards the display function manager that manages access to an extra display area defined outside of the main display area. the request comprises requesting credentials from the one software application. the method also comprises verifying the requesting credentials for the one software application in relation to the extra display area against the stored authentication credentials and, when the requesting credentials are verified, authorizing the release of the data towards the device driver.

The request may be received at a platform manager module of the electronic device. the platform manager module and the display function manager may be acting as a gatekeeper for the extra display area. the verification of the requesting credentials may be performed at the platform manager module. the method may further comprise releasing the data from the display function manager.

The method may further comprise receiving the data, at the display function manager, that comprises an image and wherein authorizing the release of the data towards the display function manager further comprises displaying the image on the extra display area.

The method may further comprise receiving the data, at the display function manager, that comprises text or video content and wherein authorizing the release of the data towards the display function manager further comprises displaying an image from the text or video content on the extra display area.

The method may further comprise receiving the data, at the display function manager, that comprises a plurality of coordinates indicating where the data should be drawn.

The one software application may be executing in user space in memory of the electronic device or outside user space in memory of the electronic device.

The data may comprise a notification from the electronic device's operating system. the data may comprise a notification related to a message received via a network interface module of the electronic device.

The request may be received from an Inter-Process Communication (IPC) component executing in a kernel space in the memory of the electronic device.

The extra display area may an electronic paper display, a bi-stable display, a conventional color display or a transparent display part of the electronic device or attached to the electronic device. the main display area may be an electronic paper display, a bi-stable display, a conventional color display or a transparent display part of the electronic device.

The extra display area may not be located on a face of the electronic device that comprises the main display area.

The electronic device may be a full touch device.

The method may optionally comprise enhancing the image into an enhanced rasterized image considering physical properties of the extra display area. the enhancing may consider a physically cutout section as a physical properties of the extra display area.

The request may comprise an image or may reference an image from a memory location in the electronic device.

The method may further comprise receiving a registration request, in relation to the extra display area, from the one software application and authenticating the one software application before granting the registration request. the registration request may comprise a package identifier (UID) and a process identifier (PID), the authentication credentials comprising the UID and PID of the one software application. Verifying the requesting credentials for the one software application may then further comprise comparing received UID and PID with the stored UID and PID.

The method may further comprise receiving a touch event notification in relation to the extra display area and forwarding the touch event notifcation to the authenticated software application.

The method further comprises receiving a pause event notification in relation to the extra display area and the one software application. the method may then further comprise ignoring a further data request from the authenticated software application, saving a state associated with the authenticated software application and de authenticating the previously authenticated software application. Upon receiving a resume event notification in relation to the extra display area screen event, the method may further comprise restoring the state after the deauthentication of the one software application and accepting an additional data request from the one software application.

The method may further comprise, when the requesting credentials are not verified, ignoring the request.

A second aspect of the present invention is directed to an electronic device comprising a main display area, a memory module and a processor module. the processor module is for executing a display function manager that manages access to an extra display area defined outside of the main display area, storing into the memory module authentication credentials identifying software applications, executing on the processor module, that are authorized for the display function manager and receiving a request, from one of the software applications executing on the processor module, for sending data towards the display function manager. the request comprises requesting credentials from the one software application. the processor is also for verifying the requesting credentials for the one software application in relation to the extra display area against the stored authentication credentials and, when the requesting credentials are verified, authorizing the release of the data towards the device driver.

The request may be received at a platform manager module executing on the processor module, the platform manager module and the display function manager acting as a gatekeeper for the extra display area.

The verification of the requesting credentials may be performed at the platform manager module, the processor module being further for releasing the data from the display function manager.

The display function manager may receive the data that comprises an image and displays the image on the extra display area.

The one software application may be executing in user space in the memory module of the electronic device. the one software application may also be executing outside user space in the memory module of the electronic device.

The processor module may further be for receiving the data, at the display function manager, that comprises text or video content and for displaying an image from the text or video content on the extra display area.

The processor module may further be for receiving the data, at the display function manager, that comprises a plurality of coordinates indicating where the data should be drawn.

The data may comprise a notification from the electronic device's operating system or a notification related to a message received via a network interface module of the electronic device.

The request may be received from an Inter-Process Communication (IPC) component executing in a kernel space in the memory module of the electronic device.

The extra display area may be an electronic paper display, a bi-stable display, a conventional color display or a transparent display part of the electronic device or attached to the electronic device. the main display area may be an electronic paper display, a bi-stable display, a conventional color display or a transparent display part of the electronic device. the electronic device may also be a full touch device.

The processor may further be for enhancing the image into an enhanced rasterized image considering physical properties of the extra display area. the enhancing may further consider a physically cutout section as a physical properties of the extra display area.

The request may comprise the image or may reference the image from a memory location in the memory module.

The processor may further be for receiving a registration request, in relation to the extra display area, from the one software application and authenticating the one software application before granting the registration request. the registration request may comprise a package identifier CUID) and a process identifier (PID), the authentication credentials comprising the UID and PID of the one software application, wherein verifying the requesting credentials for the one software application further comprises comparing received UID and PID with the stored UID and PID.

The electronic may further comprise a touch sensitive area, the processor being further for receiving a touch event notification and forwarding the touch event notification to the authenticated software application.

The processor is further for receiving a pause event notification in relation to the extra display area and the one software application, ignoring a further data request from the one software application, saving a state associated with the authenticated software application and deauthenticating the previously authenticated software application. the processor may also further be for receiving a resume event notification in relation to the extra display area screen and the one software application, restoring the state after the deauthentication of the one software application and accepting an additional data request from the software application.

The processor may further be, when the requesting credentials are not verified, for ignoring the request.

### Brief description of the drawings

Further features and exemplary advantages of the present invention will become apparent from the following detailed description, taken in conjunction with the appended drawings, in which:
Figure 1 is a logical modular representation of an exemplary electronic device in accordance with the teachings of the present invention;
Figure 2 is a flow chart of a first exemplary method in accordance with the teachings of the present invention;
Figure 3 is a flow chart and nodal operation chart of a second exemplary method in accordance with the teachings of the present invention;
Figure 4 is a logical modular representation of an exemplary electronic device in accordance with the teachings of the present invention; and
Figure 5 a perspective view of an exemplary electronic device in accordance with the teachings of the present invention.

### Detailed description

Known electronic devices include a single screen used to provide data to the user. the screen, because of user demands, tends to have high resolution and, consequently, high power consumption. When the user interacts with the device, e.g., for any content, it is done via the screen. For instance, when the screen is off and content is to be provided to the user (e.g., upon receipt of a notification), only LED, speaker or vibration is provided as turning the screen on would consume too much energy. Furthermore, the screen is also normally fully used when the device is being used by the user. As such, a second extra display area outside of the screen is useful in providing content to the user (e.g., that is meaningful and contextually relevant), especially when that second display area is provided through an energy efficient technology.

The proposed technical solution enables, in an electronic device having a first display area, authenticated release of data towards a display function manager that operates a second display area defined outside of the main display area. It becomes necessary to authenticate software applications towards the second display area because, in some embodiments, the second display area has different physical characteristics compared to expected display areas (such as the first display area). Allowing any and all software applications to access the second display area could be detrimental to the user experience (unreadable text, bad image quality, slow drawing speed) and, eventually, could also be detrimental to some physical components of the second display area (e.g., the screen being permanently damaged because of improper refresh of the display leaving a shadow or phantom image thereon). Verifying credentials from a requesting software application against stored authentication credentials before authorizing the release of the data towards the display function manager prevents these potential pitfalls.

In some embodiments, there are provided battery / turn off notifications. Before the battery is fully discharged, a specific notification may be provided which can be shown on the extra display area e.g., an EPD screen. For example: if battery charge falls to 5% charged, the electronic device and display function manager could be configured to display "Out of battery, Charge me" on the extra display area e.g., a EPD screen. Or for example: if battery charge falls to 10% charged, the electronic device and display function manager could be configured to display last calls, last SMS, next events on the extra display area before the electronic device turns off. In a further example, in response to a battery level falling below a defined threshold, the electronic device and display function manager could be configured to leave a text portion unchanged while an image associated with the notification is changed. In a further example, when the charge level of battery falls to a defined level, the electronic device and display function manager could be configured to display custom text and/or image(s), e.g., configurable through a user interface of the electronic device.

In some embodiments, there are provided visible marks notifications. In an example, an icon/small image appears on the extra display area e.g., an EPD screen, depending on some event, wherein the event is or is not configurable by a user. In an example, an Icon/Image changes its size (e.g., size becomes bigger) depending on how a related value is changing (e.g., the notification is related to the value). For instance:
i. User has < 500USD on his billing account, small image with US dollar appears;
ii. User has < 100USD on his billing account, image becomes bigger; or
iii. User has < 10USD, user sees big notification / big image on his second screen.

Notifications may be provided for which an input interface event is awaited or expected (e.g., touch on a touch sensitive surface). For instance, after release of a notification, a back swipe gesture may be detected on a touch sensitive surface. A pre-defined (or user-configurable) action may be associated with the notification and the gesture e.g., what the electronic devices is expected to do in response to the gesture. In another example, in response to an incoming SMS notification, if a swipe from right to the left is detected on a touch sensitive surface, an action could be that the front screen displays an SMS reply window. Skilled person will readily understand that the notifications described herein may react or may not react in response to an input gesture depending on different settings / configuration without affecting the teachings of the present invention.

In some embodiment, the electronic device may be configured with two or more privacy settings to be considered when notifications are to be released to the display function manager. For instance, the electronic device may provide for a private mode and public mode. When the electronic device is set to private mode, then notifications may appear in full screen or otherwise, but only limited content may be provided thereby (e.g., icons or simple visuals that indicate a notification type or the like, where some details regarding related person(s) (to / from) are removed from the released content). Conversely, when the notification setting is set to public Mode notifications may display a photo, if available, of who it's from and some or all of its content. Swiping the touch strip may dismiss any notification.

If the phone receives several notifications at the same time then they may be stacked on top of each other on one screen, the notifications collection. the user can see what has happened since she last looked at the phone and dismiss all the notifications with a swipe, just like a single notification. Notifications are never cleared from the back screen and as long as they are treated as unhandled notifications, which means that as long as the notifications are shown in status bar on the main screen they are treated as unhandled on the back-screen as well.

Some notifications are related to time sensitive events or actions in the electronic device (e.g., real-time or time critical) such as incoming call, clock alarm and timer alarm, etc. In some embodiments, these notifications can be dismissed with a swipe just like any other notification. However, in some other embodiments, the swipe also performs an additional action. For instance, the swipe gesture on the mentioned notifications may result in the following actions:

### Incoming call

- Swipe - mute ring tone
- Long press - send busy tone - results in a missed call notification [0054] Alarm
- Swipe - snooze alarm
- Long press - turn off alarm

### Timer alarm

### • Long press - turn off alarm

In some embodiments, notifications for which no input interface event has been detected may be maintained on the extra display area (e.g., as discrete icons) on top of a background image (or wallpaper).

In some embodiments, the electronic device and display function manager could be configured to support release of various notifications, which may be further designed specifically for the extra display area (e.g., taking physical limitations thereof into account). there may also be a Generic application notification, e.g., for all other 3rd party applications that can trigger notifications for release on the extra display area. When the extra display area is determined to be actively used, e.g., reading a book or RSS feed, then notifications may be released as a discrete overlay at the top of the extra display area and may further be removed after a certain time.

In some embodiments, the electronic device and display function manager release transient full-screen notifications to the extra display, which may further be made available only in public mode. For instance, an application sends data towards the display function manager for releasing a full transient screen notification on the extra display area. the full transient screen notification may be displayed by the display function manager in addition to other event notifications (e.g., for limited period of time, which may range, for instance, between 1 and 30 seconds).

For example, a full text SMS message may be received by the electronic device, which ultimately triggers release of data to the display function manager that displays a transient full screen notification. the transient full screen notifications may be dismissed, for instance, using an input interface event (e.g. a gesture such as a left/right flick/swipe at a touch sensitive area, which may further be related to the extra display area). the dismissed notification may be removed by the display driver, which may further modify the displayed image by adding a smaller version of the dismissed notification on the extra display, e.g., until an additional input event indicates that it should be removed (which additional input event may be received from a touch sensitive are associated to the main display area). If the transient full screen notification is not dismissed, then the transient full screen notification may also be replaced by another event notification (e.g., half-screen, icon, bar, etc.).

In some embodiments, the electronic device and display function manager may organize the released data to be displayed on the extra display area in a stack that contain ordered recent events, such as:
- Missed call;
- SMS message;
- Calendar event; and
- All other event in order of appearance;

In private mode, the electronic device and display function manager may provide 4 icons with counters to be displayed on the extra display area:
- Missed calls;
- Missed SMS;
- Missed Events; and
- Other events

In public mode, the electronic device and display function manager may divide the extra display area so as to provide a fixed or configurable number of sub notification areas (e.g., 3 notification slots over the wallpaper). Similar events (e.g., missed calls from one person) may always or optionally be collapsed in one item. If there is no sub area available for new notifications, old notifications may further be collapsed, e.g., by type or by indicating that "other N notifications" are available. Other event notifications also may similarly be stacked in one event notification. Stacked event notification may contain only events that have happened since last event notification was dismissed by swipe. Notifications from the extra display area may be removed by the electronic device and display function manager when a corresponding notifications displayed on the main display area are cleared therefrom. Data corresponding to notification not having a corresponding notification displayed on the main display area may be prevented from being released towards the display function manager.

It may be possible to enable private mode individually for each notification for example. 3rd party application may have an ability to create custom textual and/or image content to be released to the display function manager for display on the extra display area.

All notifications displayed on the main display area may have a corresponding, duplicated or reflected dataset released to the display function manager for display on the extra display area.

In some embodiment, notification settings can be provided for each or for a subset of the notification types, for each mode (e.g., private mode, public mode) and/or for the extra display area.

The following settings may be available:
- Turn on/off notifications;
- Mode selection for notifications: private/public;
- The ability to disable public notifications for specific application;
- Music mode on/off for wallpapers application;
- Shortcut to wallpapers settings;
- Back screen preinstalled applications;
- Wallpaper application;

A hierarchy of priorities for use in deciding which information layer to present on a display area may be provided. Different notification types are different information layers - each notification type may be seen as a layer that stays on the display area until replaced by a notification of a type with higher priority.

Different software applications may be provided in the electronic device with authentication credentials for the extra display area.

For instance, a clock application may be provided. Different settings may be stored in the memory module 1200 and considered at by the processor module before releasing data towards the display function manager that operates the extra display area. For instance, in the clock application, it may be possible to change clock style or turn it off, select active clock collection, select clock to display from the active clock collection, preview clocks from active clock collection, which may be performed using a gesture on a touch sensitive surface located near or with the main display area or the extra display area (e.g., using left/right swipe navigation at the main display area). Because of physical limitations of the extra display area (e.g., refresh rate), the clock application may be prevented from shown seconds (e.g., the processor module does not authenticate the clock application if requests are too close in time or the display function manager, upon receiving the released data, ignores the data if it is too close in time). the clock application may have a preinstalled set of clock collections. New clock collections may be available for download (e.g., as separate application package files). It may be possible to remove 3rd party clock collections, while some clock collections (e.g., the preinstalled ones) may be locked and not erasable. A setting of the clock application may allow for partial or complete image color inversion for some or all of the clocks. Other settings of the clock application may allow for changing wallpaper or selecting wallpapers from different sources.

Another application that may be provided is a wallpaper application for the extra display area. the wallpaper application may have a stand-alone mode and may also be used in conjunction with other applications such as the clock application. the clock application may also provide functionalities that are equivalent to the wallpaper application without being integrated therein. In the context of the clock application, wallpapers can be static (Gallery, Facebook, VKontakte, Instagram, 500px) or dynamic (live wallpapers). the clock application may have preinstalled set of live wallpapers and may provide for installation of live wallpapers (e.g., as separate application package files). It may be possible to remove 3rd party live wallpapers while some other live wallpapers (e.g., the preinstalled ones) may be locked and not erasable.

The wallpaper application may also allow for activating a live wallpaper or select one or several sources for static wallpaper (Gallery, Facebook, VKontakte, Instagram, 500px). A live wallpaper setting may be provided with other wallpaper settings. Static wallpapers may have 2 display modes: single and mosaic. Static wallpapers may have update interval option: 5/15/30 minutes, 1/2/4/6/12/24 hours, which may further be monitored by the processor module, e.g., using different timers. Gallery wallpaper options may have several modes: single wallpaper, multiple wallpaper and folder. Single wallpaper gallery option may present crop dialog with aspect ratio equal to back screen resolution. the list of wallpaper options may present additional information about selected options (e.g., single/multiple/folder for Gallery item). the memory module may further store user credentials for external providers (e.g., Facebook, VKontakte, Instagram and 500px services) so that the wallpaper application may access these providers as a wallpaper source of wallpaper collection.

For Facebook/VKontakte wallpaper sources, different settings or mode may be provided: single photo, multiple photos, album and user's news feed. Single and multiple photos may be selected from user's albums.

For Instagram wallpaper source, different settings or mode may be provided: single photo, my stream, favorites, friends, tag.

For 500px wallpaper source, different settings or mode may be provided: photos, stories, flow, favorites, popular, editor's choice, upcoming, fresh.

The wallpaper application may include a least 3 types of preloaded live wallpapers: changing type, weather, all about me. Changing types live wallpaper may be fractal/image/texture generation based on some rules. Wallpaper may use phone system information (e.g., received calls/messages) as an input for selecting / preparing / generating data to be displayed.

Weather live wallpaper may use location information to provide weather information. A setting may be provided to choose one or several locations manually. A touch input (e.g., left/right swipe on a touch sensitive surface) may cause the weather live wallpaper to switch between several locations. Location may contain background photo based on current weather/city.

All about me live wallpaper may provide social user's information from different social networks: Facebook, VKontakte, twitter. Wallpaper may display public replies.

Another example of application is a todo application, for which settings may be adjusted from a main display area application icon. the todo application may allow for creating several todo lists from the main display area, selecting a todo list from the main display area and sending an instruction for the selected todo list to be displayed on the extra display area (e.g., the processor module receives a request that comprises the todo list and authenticates the todo application before releasing the data towards the display driver). the todo application may be limited to displaying only one todo list at one time. Other settings of the todo application may allow for selecting a todo list theme for each todo list and adding/editing/removing items to the list. Items count in the todo list may be limited to N items.

Another example of application is a standalone weather application, for which settings may be adjusted from a main display area application icon. the weather application may detect user location and suggest city at start up. Current location may be available as separate option and it may not be possible to delete the option. the weather application may allow for adding several cities using text search with suggestions and may also allow for switching between two navigation modes: one city and multiple cities. In one city mode user may select only one city and switch between modes: day>week; day>next day; day>next week. Mode defines left/right swipes external touch sequence. In multiple cities mode user may select several cities and switch between modes: day; week. Mode defines left/right swipes external touch sequence.

Another example of application is a calendar application, for which settings may be adjusted from a main display area application icon. the electronic device may be associated to user account(s) for which account calendar information is available. Local calendar information may also be available. When no account calendar information is found, the calendar application may provide a specific interactive workflow (e.g., "add calendar" on the main display area) for opening an account or for associating an existing account with the application / with the electronic device. A put to back button or option in the calendar application may be available only when calendar information is found.

The "add calendar" workflow may allow for choosing one calendar from a list of available calendars at the electronic device (local information, creating an account or associated the calendar to one or more accounts). the calendar application may also allow for choosing one of the following options for the extra display area: left/right navigation: event>next event>...; day>next day>...; week>next week>...; event>day>week.

Another example of application is an interactive reminder application, for which settings may be adjusted from a main display area application icon. the settings of the interactive reminder application may include a predefined list of interactive reminder templates and may also allow for changing repeating options. the interactive reminder application may not be available as stand-alone application towards the extra display area, but may be available for other application to use (e.g., authentication credentials for the interactive reminder application indicate some limitations). For instance, the interactive reminder application may only be allowed to request display of full screen notifications.

Another example of application is a countdown application, for which settings may be adjusted from a main display area application icon. Settings may be provided for choosing from a predefined list of commitment templates, setting a date (e.g., starting from date or ending date), choosing from several commitments and switching between them (e.g., with an touch input gesture such as a left/right swipe near or at the extra display area), setting custom commitment (change text and image), changing reminder options for the each commitment (for ending date), etc.

Another example of application is a put-to-back application, for which settings may be adjusted from a main display area application icon. A put-to-back screenshot history application may further be available separately. A put-to-back gesture may be available on the electronic device to take a screenshot and place it to the extra display area without any additional action (e.g., a double finger down swipe on a touch sensitive surface over the main display area). For instance, the screenshot be sent or referenced in a request from the put-to-back application to the processor module, which would authenticate the put-to-back application before releasing request (e.g., the screenshot) towards the display function manager for display on the extra display area. the put-to-back application may be available in the recent applications list from the memory module. It may be possible to capture up to 10 screenshots, store them in the memory module and manage them (e.g., select a screenshot, delete screenshots from history, etc.) via the put-to-back application or put-to-back screenshot history application. An input interface event (e.g., a left/right swipe over a touch sensitive area near or over the main or the extra display area) may switch between put-to-back screenshots from the history. When the put-to-back history is empty, a tutorial may be displayed on the main display area. A put-to-back button, otherwise available from an action bar displayed on the main display area, may be disabled during the tutorial.

Another example of application is a send-something application, for which settings may be adjusted from a main display area application icon. A "local" send-something application is able to pair with one or more "remote" send-something applications executing on remote electronic devices having an extra display area. Once paired, the local send-something application may send data to one or more remote send-something applications for display on the remote electronic devices' extra display area. the send-something application may allow for choosing from a predefined list of send-something templates, editing text in each template, adding his/her own image, choosing several send-something screens and switch therebetween (e.g., with a touch input from a touch sensitive surface near or at the extra display area such as a left/right swipe at the back screen), adding one or more remote electronic devices and sending send-something data directly to at least one of them.

Another example of application is a daily quotes application, for which settings may be adjusted from a main display area application icon. the daily quotes application allows for selecting one or several quotes sources (e.g., famous people, jokes, etc.), selecting a refresh interval, switch between quotes (e.g., using a touch event from a touch sensitive surface).

Another example of application is a birthday application, for which settings may be adjusted from a main display area application icon. the birthday application may allow for selecting birthdays to remind from several sources (e.g., contacts, Facebook, VKontakte), adding personal birthday's list to remind, viewing birthdays from all sources in one list, etc. the birthday application may have a stand-alone mode and may also be used in conjunction with other applications such as the calendar application. A notification time setting may be available in the birthday application (e.g., previous day reminder time, birthday day reminder time, etc.).

Another example of application is a Rich Site Summary (often dubbed "Really Simple Syndication") - RSS reader application, for which settings may be adjusted from a main display area application icon. the RSS reader application may allow for selecting one or more sources from a predefined RSS sources list (e.g., from remote providers and/or from local repository stored in the memory module). Sources setup screen may be displayed only at first start up. the RSS reader application may allow for requesting, from the main display area, release of a specific content from the memory module to the extra display area. the RSS reader application may allow adding custom RSS link to the list and removing custom RSS links from the list. the RSS reader application content to be displayed from the memory module on the extra display area may comprise display title, source name and time. When the RSS application setup is complete, the application icon may display the titles from the list released to the extra display area. User may be able to select an interesting title and view full link in a web browser.

Another example of application is a timer application, for which settings may be adjusted from a main display area application icon. the timer application may allow for setting up a timer from the main display area by requesting release of an initial content corresponding to the timer towards the display driver (the request is authenticated by the processor module before being released towards the display driver). Once the extra display area displays the timer, the timer application may allow for starting the timer and stopping the timer (e.g., from one or more input from a touch sensitive surface near or at the extra display area), resetting the timer (e.g., from one or more input from a touch sensitive surface near or at the main display area) and enabling countdown timer (for hours, minutes and seconds). When the timer application is started, it may request release of subsequent content corresponding to the (changing) timer towards the display driver.

The processor module may authenticate any of the exemplary applications (e.g. the timer application) once for a period of time (e.g., 20 seconds) or until another application requests release of data towards the display driver. During the period of time for which the application remains authenticated, following requests may be released towards the display driver without further authentication. Once the period of time expires, the processor may have to re-authenticate the request. When another application requests release of data (e.g., during the period of time), the processor may pause the previously authenticated application and cause the display driver to ignore all data that it may receive therefrom. A state associated with the previously authenticated application may be stored in the memory module for future use. the processor may then authenticate the new request from the other application (e.g., if the other application has a higher priority or if the data to be released has a higher priority). Once the new request from the other application is completed, the processor module may restore the previously stored state from the memory module and re-authenticate the application for release of data towards the display driver.

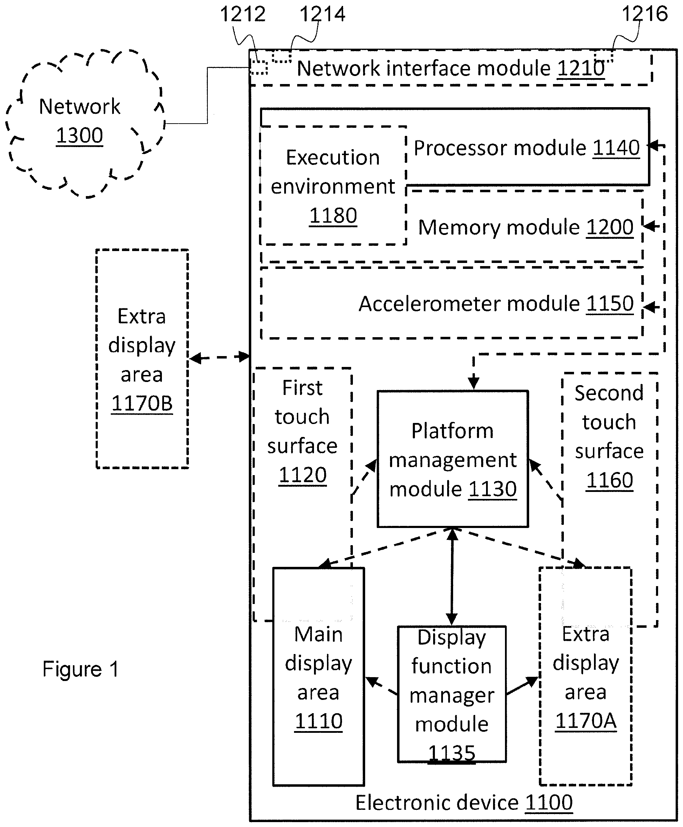

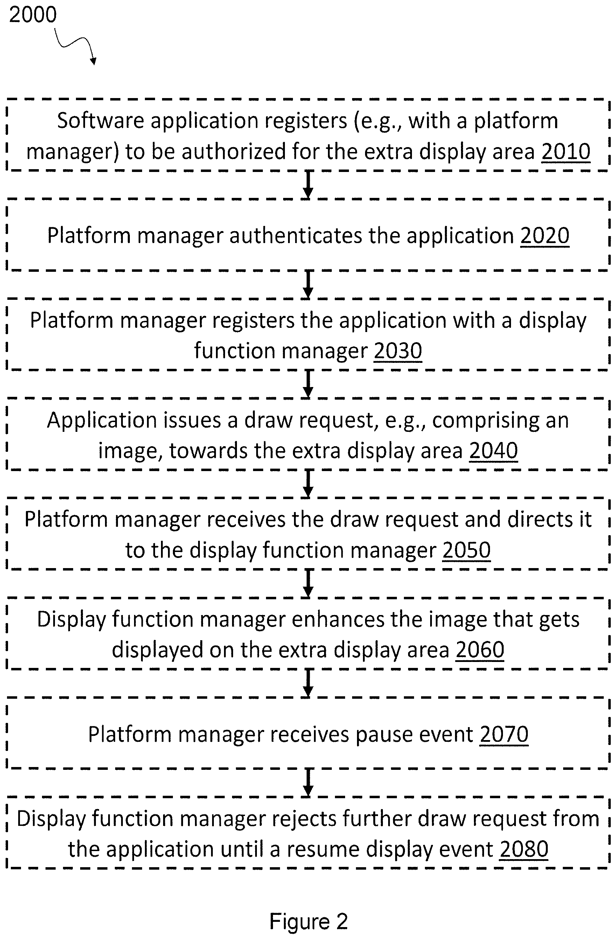

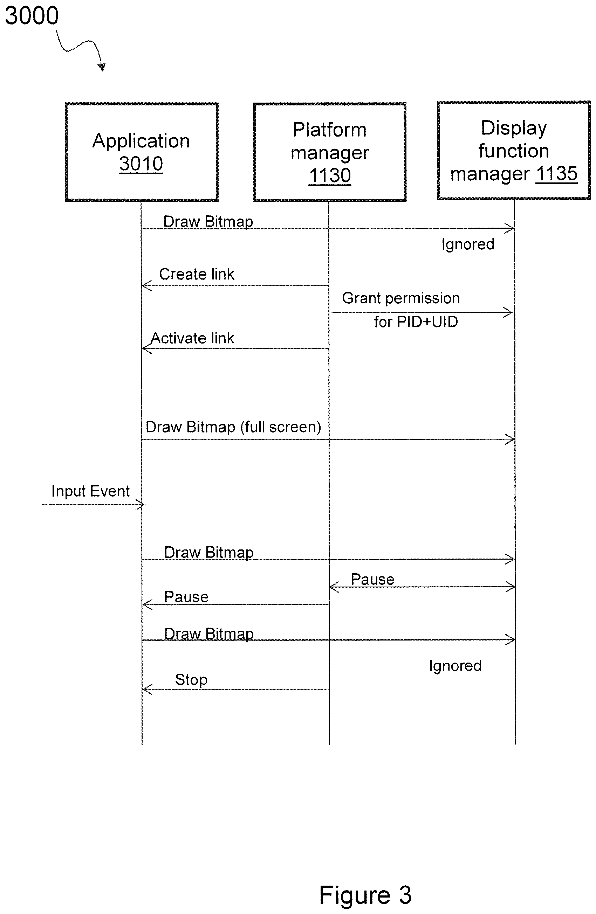

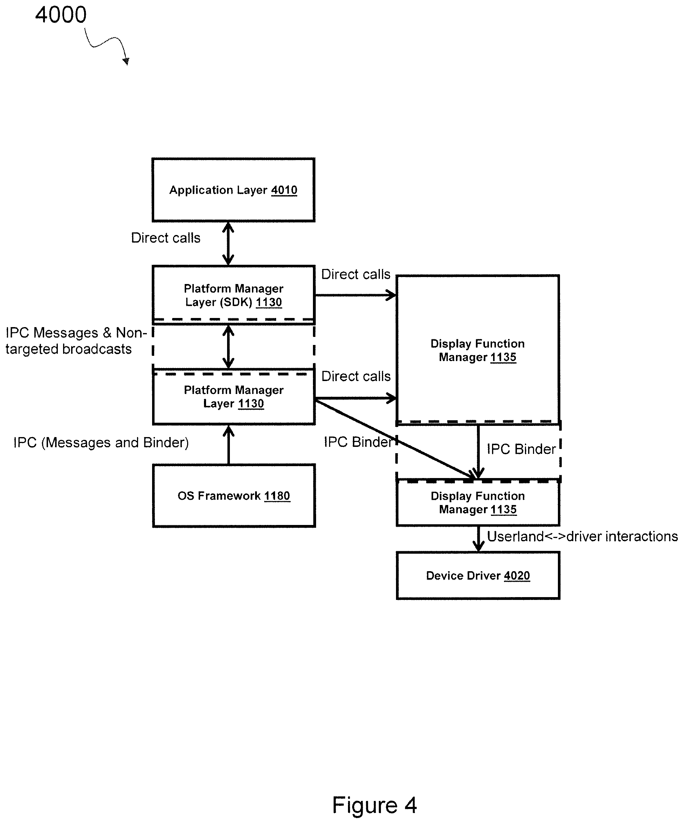

Reference is now concurrently made to the Figure 1 to 5. Figures 1 and 4 show logical modular representations of an exemplary electronic device 1100 in accordance with the teachings of the present invention. Figure 2 shows a flow chart of an exemplary method 2000 in the exemplary electronic device 1100, in accordance with the teachings of the present invention. Figure 3 shows a flow chart and nodal operation chart of an exemplary method 3000 in the exemplary electronic device 1100, in accordance with the teachings of the present invention. the electronic device 1100 comprises a main display area 1110, a platform management module 1130, a display function manager module 1135 and a processor module 1140. the electronic device 1100 may also comprise, depending on the selected embodiments, a touch sensitive surface module 1120, an accelerometer module 1150, a second touch sensitive surface 1160, an extra display area 1170A or 1170B (the two alternatives being referred to as 1170), a storage module (not shown), an execution environment and OS framework 1180, a memory module 1200 and a network interface module 1210 that may be used to connect to a network 1300. the network interface module 1210 may comprise different interfaces 1212, 1214, 1216 used to connect to the network 1300 or to other devices (not shown). the different interfaces 1212, 1214, 1216 may, for instance, be used to connect to a Wide Area Network (WAN) (e.g., cellular network using LTE, 3G and/or WiMax technologies), a Local Area Network (LAN) or Wireless LAN (e.g., using 802.11b/g/n, Ethernet cable), a local device (e.g., a Universal Serial Bus (USB) interface). Physical and logical connections between the different modules 1110 - 1210 are not necessarily shown on the logical representation of Figure 1 to ensure clarity and readability of the figure. Skilled persons will readily understand that various electrical connections are required for proper function of the electronic device 1100, but those do not affect the teachings of the present invention. Likewise, some modules are not shown or shown as optional in the context of the present invention while they may be required for the proper function of the electronic device 1100 (e.g., a power module, battery (not shown) or the memory module 1200).

The display function manager module 1135 interfaces with a device driver 4020 that operates the extra display area 1170 defined outside of the main display area 1110. the display function manager module 1135 may enhance received data for display on the extra display area 1170 considering physical limitations. For instance, an image (received as the data or in the data or prepared from the received date) may be enhanced into an enhanced rasterized image considering physical limitations or physical properties of the extra display area 1170 (e.g., refresh rate, considering physical cutouts, considering one or more readings from one or more temperature probe (not shown) (e.g., thermistors) of the extra display area 1170 in order to properly compute the waveforms, etc.). the display function manager module 1135 may have one or more application programming interfaces (APIs) published in the electronic device 1100 in order to interact with software applications executing on the processor module 1140 and/or with the platform management module 1130. For instance, the display function manager module 1135 may have APIs available for direct inter-procedure calls as well as lower level APIs available through IPC calls. the extra display area 1170 and the main display area 1110 may be of bi-stable technology or Electronic Paper Display (EPD) technology or Liquid Crystal Display (LCD) technology or active-matrix organic light-emitting diode (AMOLED) technology, to mention only a few technologies. In one embodiment, the extra display area 1170 is of bi-stable technology or Electronic Paper Display (EPD) technology and the main display area is of another technology, such as LCD technology or AMOLED technology.

The platform management module 1130 may have one or more application programming interfaces (APIs) published in the electronic device 1100 in order to interact with software applications executing on the processor module 1140 through the application layer 4010 as well as others such as the display function manager module 1135. the platform management module 1130 may be implemented as a software module and/or hardware module in the electronic device 1100. the platform management module 1130 may receive a request (e.g., through one of the APIs) from one software application executing on the processor module 1140 of the electronic device 1110. the request indicates that the software application is sending, or intends to send, data towards the display function manager module 1135 for display at the extra display area 170. the request comprises requesting credentials from the one software application in tat regards. the platform management module 1130 then verifies the requesting credentials for the software application in relation to the extra display area 1170 against stored authentication credentials and, when the requesting credentials are verified, authorizes the release of the data towards the display function manager module 1135. Before authorizing the release of the data, the gatekeeper may receive a registration request, in relation to the extra display area 1170, from the software application. the registration request may be a prerequisite for the request to release data to be authorized. the registration request may comprise a package identifier (UID) and a process identifier (PID) that uniquely identify the software application from the perspective of the processor module 1140. the UID and PID may be used as authentication credentials of the software application. , Verifying the requesting credentials for the software application would then comprise comparing received UID and PID with the stored (from the registration request) UID and PID.

The platform management module 1130 may receive inputs (e.g., from an OS framework) from the touch sensitive surface 1120 and the second touch sensitive surface 1160 defined as a single virtual touch sensitive surface. the virtual touch sensitive surface may be useful to represent the capacity of the device 1100 in different internal or external interfaces (e.g., application programming interfaces). the platform management module 1130 may receive an input (directly or through another module) from the touch sensitive surface 1120 and/or the optional second touch sensitive surface 1160 as a recognized (or iconic) gesture. the platform management module 1130 may further receive input (directly or through another module) from additional peripherals or devices, in addition to the ones exemplified with their own modules (1120, 1150, 1160) that may be used in the context of the present invention as an input event provider. For instance, the platform management module 1130 may receive data from an accelerometer module, microphones that can detect sounds through the processor module 1140, a flat panel loudspeaker used as a sound, touch or vibration input interface, and one or more cameras that can detect or store images through the processor module 1140 and/or the memory module 1200. the input received by the gatekeeper 1130 may then be forwarded to the authenticated software application.

The extra display area 1170 may be provided within the electronic device 1100 (1170A) or on an accessory 1400 (1170B) attached to the electronic device 1100. the extra display area 1170 is driven through the display function manager module 1135 that ultimately runs on the processor module 1140, even when connected as the accessory 1400.

In the example depicted on Figure 2, a software application registers (e.g., with the platform manager 1130) to be authorized for the extra display area 1170 (2010). the platform manager 1130 authenticates the application (2020) and registers the application with the display function manager 1135 (2030). When the application issues a draw request, e.g., comprising an image, towards the extra display area 1170 (2040), the platform manager receives 1130 the draw request and directs it to the display function manager 1135 (2050). the display function manager 1135 enhances the image that gets displayed on the extra display area 1170 (2060). If the platform manager 1130 receives pause event (2070), then it informs the display function manager 1135 that rejects further draw request from the application until a resume display event is further received (2080).

In the example depicted on Figure 3, an application 3010 tries to send a request for the extra display area 1170 to the display function manager 1135, which gets ignored as no prior authorization has taken place. Once a link is created for the application 3010 by the platform manager 1135, the display function manager 1135 is informed of the granted permission for the application 3010. When the application 3010 tries to send a request for the extra display area 1170 to the display function manager 1135, it is then accepted. An input event may be received by the application 3010 in relation to the extra display area 110, which may trigger a new request therefrom. Afterwards, the platform manager 1130 and/or the display function manager 1135 may have to suspend the authorization (or pause) for the application 3010. the platform manager 1130 informs the application 3010 of the pause. When the application 3010 tries to send a request for the extra display area 1170 to the display function manager 1135, it gets ignored because of the suspension. the platform manager 1130 then informs the application 3010 that its authorization has been revoked (or stopped).

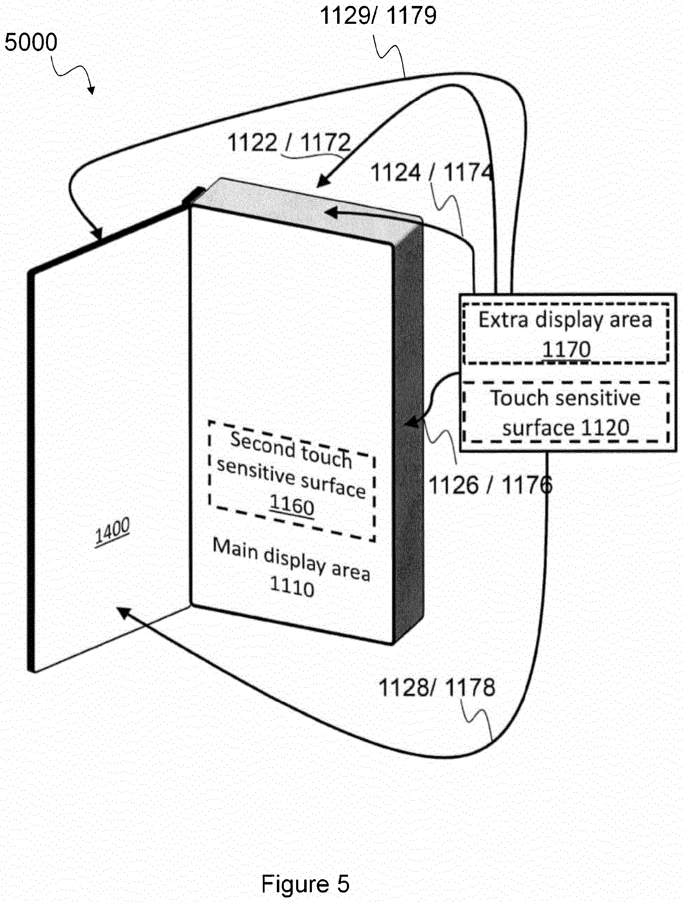

On Figure 5, the main display area 1110 of the electronic device 1100 is shown on what will be referred to as the front face of the electronic device 1100. In the example of Figure 5, the extra display area 1170 may be located on another face of the electronic device 1100, i.e., shown as being located on a back face of the electronic device 1100 (1172), on a top (and/or bottom) face of the electronic device 1100 (1174) or on at least one lateral face of the electronic device 1100 (1176). Only the top face 1172 and one lateral face 1176 are shown because of the perspective view of Figure 5, but skilled person will readily understand that the bottom face and/or other lateral face could be used as well. While the electronic device 1100 as shown on Figure 5 is a typical rectangular prism (or bar form factor device), skilled persons will readily acknowledge that the teachings of the present invention are applicable to various devices having different configurations. Notably, the edges between the top and/or lateral and/or back faces may be so rounded as to define a single rounded face. Pushed to the limit, the electronic device 1100 could be a complete or partial sphere where the different surfaces are defined by the view angle of a typical user, e.g., the first face being the visible one and the hidden face being the second one. the extra display area 1170, as defined with reference to the example shown on Figure 5, may thus be overlapping completely or partially over 1172, 1174 and 1176 as shown on Figure 5. In addition, the edge between the front face and the other faces may also be rounded. However, at least a significant portion of the extra display area 1170 is not overlapping with the main display area 1110. More specifically, there exist at least a portion of the extra display area 1170 that can be operated by a device driver separately from the main display area 1110. In the example of Figure 5, the extra display area 1170 may also be located on the accessory 1400 connected to the electronic device 1100, i.e., shown as being located on a front face of the accessory 1400 (1178), or a back face of the accessory 1400 (1179).

There could also be a single (1120), multiple touch surfaces (1120 / 1160) or any number of separate or common touch sensitive surfaces 1122, 1124, 1126, 1128, 1129 (e.g., there could be at least as many overlapping / common or independent touch sensitive surfaces as there are faces to the electronic device 1100 and the accessory 1400).

In the example shown, an image is displayed (or has been displayed and is now shown) on the first display area 1110 on the first (i.e., front) face. the image may be fixed (as exemplified on Figure 5) or may be dynamic (e.g., an animated image or a video) or could also be touch-interactive (e.g., a menu, a device main or home screen, an icon map or any other image generated by a software or hardware component of the display device 1100). the main display area 1110 may alternatively be blank or turned-off (e.g., the display device 1100 is off or is shut down, is in sleep mode or a screen that holds the first display area is turned off).

The processor module 1140 may represent a single processor with one or more processor cores or an array of processors, each comprising one or more processor cores. the memory module 1200 may comprise various types of memory (different standardized or kinds of Random Access Memory (RAM) modules, memory cards, Read-Only Memory (ROM) modules, programmable ROM, etc.). the storage module 1190 may represent one or more logical or physical hard disk drive (HDD) or solid-state drive (SSD) (or an array thereof) or any equivalent storage technology. the network interface module 1210 represents at least one physical interface that can be used to communicate with other nodes. the network interface module 1210 may be made visible to the other modules of the network node 1100 through one or more logical interfaces. the actual stacks of protocols used by the physical network interface(s) and/or logical network interface(s) of the network interface module 1210 do not affect the teachings of the present invention. the variants of processor module 1140, memory module 1200, network interface module 1210 and storage module 1190 usable in the context of the present invention will be readily apparent to persons skilled in the art. Likewise, even though explicit mentions of the memory module 1200 and/or the processor module 1140 are not made throughout the description of the present examples, persons skilled in the art will readily recognize that such modules are used in conjunction with other modules of the network node 1100 to perform routine as well as innovative steps related to the present invention.

A method is generally conceived to be a self-consistent sequence of steps leading to a desired result. these steps require physical manipulations of physical quantities. Usually, though not necessarily, these quantities take the form of electrical or magnetic signals capable of being stored, transferred, combined, compared, and otherwise manipulated. It is convenient at times, principally for reasons of common usage, to refer to these signals as bits, values, parameters, items, elements, objects, symbols, characters, terms, numbers, or the like. It should be noted, however, that all of these terms and similar terms are to be associated with the appropriate physical quantities and are merely convenient labels applied to these quantities. the description of the present invention has been presented for purposes of illustration but is not intended to be exhaustive or limited to the disclosed embodiments. Many modifications and variations will be apparent to those of ordinary skill in the art. the embodiments were chosen to explain the principles of the invention and its practical applications and to enable others of ordinary skill in the art to understand the invention in order to implement various embodiments with various modifications as might be suited to other contemplated uses.

### The following is a list of further preferred embodiments of the invention:

Embodiment 1. A method for authenticating release of data towards a device driver in an electronic device having a main display area comprising:
   storing authentication credentials identifying software applications, executing on the electronic device, that are authorized for a display function manager;
   receiving a request, from one of the software applications executing on the electronic device, for sending data towards the display function manager that manages access to an extra display area defined outside of the main display area, wherein the request comprises requesting credentials from the one software application;
   verifying the requesting credentials for the one software application in relation to the extra display area against the stored authentication credentials; and
   when the requesting credentials are verified, authorizing the release of the data towards the device driver.
Embodiment 2. The method of embodiment 1, wherein the request is received at a platform manager module of the electronic device, the platform manager module and the display function manager acting as a gatekeeper for the extra display area.
Embodiment 3. The method of embodiment 2, wherein the verification of the requesting credentials is performed at the platform manager module, the method further comprising releasing the data from the display function manager.
Embodiment 4. The method of embodiment 1, further comprising receiving the data, at the display function manager, that comprises an image and wherein authorizing the release of the data towards the display function manager further comprises displaying the image on the extra display area.
Embodiment 5. The method of embodiment 1, further comprising receiving the data, at the display function manager, that comprises text or video content and wherein authorizing the release of the data towards the display function manager further comprises displaying an image from the text or video content on the extra display area.
Embodiment 6. The method of embodiment 1, further comprising receiving the data, at the display function manager, that comprises a plurality of coordinates indicating where the data should be drawn.
Embodiment 7. The method of embodiment 1, wherein the one software application is executing in user space in memory of the electronic device.
Embodiment 8. The method of embodiment 1, wherein the one software application is executing outside user space in memory of the electronic device.
Embodiment 9. The method of any one of embodiments 1 to 8, wherein the data comprises a notification from the electronic device's operating system.
Embodiment 10. The method of any one of embodiments 1 to 8, wherein the data comprises a notification related to a message received via a network interface module of the electronic device.
Embodiment 11. The method of any one of embodiments 1 to 8, wherein the request is received from an Inter-Process Communication (IPC) component executing in a kernel space in the memory of the electronic device.
Embodiment 12. The method of embodiment 1, wherein the extra display area is an electronic paper display, a bi-stable display, a conventional color display or a transparent display part of the electronic device and the main display area is an electronic paper display, a bi-stable display, a conventional color display or a transparent display part of the electronic device.
Embodiment 13. The method of embodiment 1, wherein the extra display area is an electronic paper display, a bi-stable display, a conventional color display or a transparent display attached to the electronic device and the main display area is an electronic paper display, a bi-stable display, a conventional color display or a transparent display part of the electronic device.
Embodiment 14. The method of embodiment 12 or embodiment 13, wherein the extra display area is not located on a face of the electronic device that comprises the main display area.
Embodiment 15. The method of embodiment 12 or embodiment 13, wherein electronic device is a full touch device.
Embodiment 16. The method of any one of embodiments 1 to 8, 12 or 13 further comprising, enhancing the image into an enhanced rasterized image considering physical properties of the extra display area.
Embodiment 17. The method of embodiment 16, wherein the enhancing considers a physically cutout section as a physical properties of the extra display area.
Embodiment 18. The method of any one of embodiments 1 to 8, 12 or 13, wherein the request comprises an image.
Embodiment 19. The method of any one of embodiments 1 to 8, 12 or 13, wherein the request references an image from a memory location in the electronic device.
Embodiment 20. The method of any one of embodiments 1 to 8, 12 or 13, further comprising receiving a registration request, in relation to the extra display area, from the one software application and authenticating the one software application before granting the registration request.
Embodiment 21. The method of embodiment 20, wherein the registration request comprises a package identifier (UID) and a process identifier (PID), the authentication credentials comprising the UID and PID of the one software application, wherein verifying the requesting credentials for the one software application further comprises comparing received UID and PID with the stored UID and PID.
Embodiment 22. The method of any one of embodiments 1 to 8, 12 or 13, further comprising receiving a touch event notification in relation to the extra display area and forwarding the touch event notification to the authenticated software application.
Embodiment 23. The method of any one of embodiments 1 to 8, 12 or 13, further comprising receiving a pause event notification in relation to the extra display area and the one software application.
Embodiment 24. The method of embodiment 19, further comprising:
   ignoring a further data request from the authenticated software application;
   saving a state associated with the authenticated software application; and deauthenticating the previously authenticated software application.
Embodiment 25. The method of embodiment 24, further comprising:
   receiving a resume event notification in relation to the extra display area screen event;
   restoring the state after the deauthentication of the one software application; and
   accepting an additional data request from the one software application.
Embodiment 26. The method of any one of embodiments 1 to 8, 12 or 13 further comprising, when the requesting credentials are not verified, ignoring the request.
Embodiment 27. An electronic device comprising:
   a main display area;
   a memory module;
   a processor module for:
      executing a display function manager that manages access to an extra display area defined outside of the main display area;
      storing into the memory module authentication credentials identifying software applications, executing on the processor module, that are authorized for the display function manager;
      receiving a request, from one of the software applications executing on the processor module, for sending data towards the display function manager, wherein the request comprises requesting credentials from the one software application;
      verifying the requesting credentials for the one software application in relation to the extra display area against the stored authentication credentials; and
      when the requesting credentials are verified, authorizing the release of the data towards the device driver.
Embodiment 28. The electronic device of embodiment 27, wherein the request is received at a platform manager module executing on the processor module, the platform manager module and the display function manager acting as a gatekeeper for the extra display area.
Embodiment 29. The electronic device of embodiment 28, wherein the verification of the requesting credentials is performed at the platform manager module, the processor module being further for releasing the data from the display function manager.
Embodiment 30. The electronic device of embodiment 27, wherein the display function manager receives the data that comprises an image and displays the image on the extra display area.
Embodiment 31. The electronic device of embodiment 27, wherein the one software application is executing in user space in the memory module of the electronic device.
Embodiment 32. The electronic device of embodiment 27, wherein the processor module is further for receiving the data, at the display function manager, that comprises text or video content and for displaying an image from the text or video content on the extra display area.
Embodiment 33. The electronic device of embodiment 27, wherein the processor module is further for receiving the data, at the display function manager, that comprises a plurality of coordinates indicating where the data should be drawn.
Embodiment 34. The electronic device of embodiment 27, wherein the one software application is executing outside user space in the memory module of the electronic device.
Embodiment 35. The electronic device of any one of embodiments 27 to 34, wherein the data comprises a notification from the electronic device's operating system.
Embodiment 36. The electronic device of any one of embodiments 27 to 34, wherein the data comprises a notification related to a message received via a network interface module of the electronic device.
Embodiment 37. The electronic device of any one of embodiments 27 to 34, wherein the request is received from an Inter-Process Communication (IPC) component executing in a kernel space in the memory module of the electronic device.
Embodiment 38. The electronic device of embodiment 23, wherein the extra display area is an electronic paper display, a bi-stable display, a conventional color display or a transparent display part of the electronic device and the main display area is an electronic paper display, a bi-stable display, a conventional color display or a transparent display part of the electronic device.
Embodiment 39. The electronic device of embodiment 23, wherein the extra display area is an electronic paper display, a bi-stable display, a conventional color display or a transparent display attached to the electronic device and the main display area is an electronic paper display, a bi-stable display, a conventional color display or a transparent display part of the electronic device.
Embodiment 40. The electronic device of embodiment 38 or embodiment 39, wherein the electronic device is a full touch device.
Embodiment 41. The electronic device of any one of embodiments 27 to 34, 38 or 39, wherein the processor is further for enhancing the image into an enhanced rasterized image considering physical properties of the extra display area.
Embodiment 42. The electronic device of embodiment 41, wherein the enhancing considers a physically cutout section as a physical properties of the extra display area.
Embodiment 43. The electronic device of any one of embodiments 27 to 34, 38 or 39, wherein the request comprises the image.
Embodiment 44. The electronic device of any one of embodiments 27 to 34, 38 or 39, wherein the request references the image from a memory location in the memory module.
Embodiment 45. The electronic device of any one of embodiments 27 to 34, 38 or 39, wherein the processor is further for receiving a registration request, in relation to the extra display area, from the one software application and authenticating the one software application before granting the registration request.
Embodiment 46. The electronic device of embodiment 45, wherein the registration request comprises a package identifier (UID) and a process identifier (PID), the authentication credentials comprising the UID and PID of the one software application, wherein verifying the requesting credentials for the one software application further comprises comparing received UID and PID with the stored UID and PID.
Embodiment 47. The electronic device of any one of embodiments 27 to 34, 38 or 39, further comprising a touch sensitive area, the processor being further for receiving a touch event notification and forwarding the touch event notification to the authenticated software application.
Embodiment 48. The electronic device of any one of embodiments 23 to 28, 32 or 33, wherein the processor is further for receiving a pause event notification in relation to the extra display area and the one software application.
Embodiment 49. The electronic device of embodiment 48, wherein the processor is further for:
   ignoring a further data request from the one software application;
   saving a state associated with the authenticated software application; and
   deauthenticating the previously authenticated software application.
Embodiment 50. The electronic device of embodiment 49, wherein the processor is further for:
   receiving a resume event notification in relation to the extra display area screen and the one software application;
   restoring the state after the deauthentication of the one software application; and
   accepting an additional data request from the software application.
Embodiment 51. The electronic device of any one of embodiments 27 to 34, 38 or 39, wherein the processor is further for, when the requesting credentials are not verified, ignoring the request.

## Claims

1. A method for authenticating release of data towards a device driver (4020) in an electronic device (1100) having a main display area (1110) comprising:
storing authentication credentials identifying software applications, executing on the electronic device (1100), that are authorized for a display function manager (1135);
receiving a request, from one of the software applications executing on the electronic device (1100), for sending data towards the display function manager (1135) that manages access to an extra display area (1170) defined outside of the main display area (1110), wherein the request comprises requesting credentials from the one software application;
verifying the requesting credentials for the one software application in relation to the extra display area (1170) against the stored authentication credentials;
when the requesting credentials are verified, authorizing the release of the data towards the device driver (4020);
receiving a pause event notification in relation to the extra display area (1170) and the one software application;
ignoring a further data request from the authenticated software application;
saving a state associated with the authenticated software application; and
deauthenticating the previously authenticated software application; and
further comprising:
receiving a resume event notification in relation to the extra display area screen event;
restoring the saved state; re-authenticating the one software application; and
accepting an additional data request from the one software application.

2. The method of claim 1, wherein the request is received at a platform manager module (1130) of the electronic device (1100), the platform manager module (1130) and the display function manager (1135) acting as a gatekeeper for the extra display area (1170), and wherein the verification of the requesting credentials is performed at the platform manager module (1130), the method further comprising releasing the data from the display function manager (1135).

3. The method of claim 1, further comprising:
receiving the data, at the display function manager (1135), that comprises an image and wherein authorizing the release of the data towards the display function manager (1135) further comprises displaying the image on the extra display area (1170); or
receiving the data, at the display function manager (1135), that comprises text or video content and wherein authorizing the release of the data towards the display function manager (1135) further comprises displaying an image from the text or video content on the extra display area (1170); or
receiving the data, at the display function manager (1135), that comprises a plurality of coordinates indicating where the data should be drawn.

4. The method of claim 1, wherein:
the one software application is executing in user space in memory (1200) of the electronic device (1100); or
the one software application is executing outside user space in memory (1200) of the electronic device (1100).

5. The method of anyone of claims 1 to 4, wherein:
the data comprises a notification from the electronic device's operating system (1180); or
the data comprises a notification related to a message received via a network interface module (1210) of the electronic device (1100).

6. The method of anyone of claims 1 to 4, wherein the request is received from an Inter-Process Communication (IPC) component executing in a kernel space in the memory (1200) of the electronic device (1100).

7. The method of claim 1, wherein:
the extra display area (1170A) is an electronic paper display, a bi-stable display, a conventional color display or a transparent display part of the electronic device (1100) and the main display area (1110) is an electronic paper display, a bi-stable display, a conventional color display or a transparent display part of the electronic device (1100); or
the extra display area (1170B) is an electronic paper display, a bi-stable display, a conventional color display or a transparent display attached to the electronic device (1100) and the main display area (1110) is an electronic paper display, a bi-stable display, a conventional color display or a transparent display part of the electronic device (1100).

8. The method of claim 7, wherein:
the extra display area (1170) is not located on a face of the electronic device (1100) that comprises the main display area (1110); or
the electronic device (1100) is a full touch device.

9. The method of anyone of claims 1 to 4 and 7 further comprising, enhancing the image into an enhanced rasterized image considering physical properties of the extra display area (1170), wherein the enhancing considers a physically cutout section as a physical properties of the extra display area (1170).

10. The method of anyone of claims 1 to 4 and 7, wherein:
the request comprises an image; or
the request references an image from a memory location in the electronic device (1100).

11. The method of anyone of claims 1 to 4 and 7, further comprising receiving a registration request, in relation to the extra display area (1170), from the one software application and authenticating the one software application before granting the registration request, wherein the registration request comprises a package identifier (UID) and a process identifier (PID), the authentication credentials comprising the UID and PID of the one software application, wherein verifying the requesting credentials for the one software application further comprises comparing received UID and PID with the stored UID and PID.

12. The method of anyone of claims 1 to 4 and 7, further comprising:
receiving a touch event notification in relation to the extra display area (1170) and forwarding the touch event notification to the authenticated software application; or
when the requesting credentials are not verified, ignoring the request.

13. An electronic device (1100) comprising:
a main display area (1110);
a memory module (1200);
a processor module (1140) for:
executing a display function manager (1135) that manages access to an extra display area (1170) defined outside of the main display area (1110);
storing into the memory module (1200) authentication credentials identifying software applications, executing on the processor module, that are authorized for the display function manager (1135);
receiving a request, from one of the software applications executing on the processor module (1140), for sending data towards the display function manager (1135), wherein the request comprises requesting credentials from the one software application;
verifying the requesting credentials for the one software application in relation to the extra display area (1170) against the stored authentication credentials;
when the requesting credentials are verified, authorizing the release of the data towards the device driver (4020);
receiving a pause event notification in relation to the extra display area (1170) and the one software application;
ignoring a further data request from the authenticated software application;
saving a state associated with the authenticated software application; and
deauthenticating the previously authenticated software application; and
further comprising:
receiving a resume event notification in relation to the extra display area screen event;
restoring the saved state; re-authenticating the one software application; and
accepting an additional data request from the one software application.

14. The electronic device (1100) of claim 13, further configured to perform a method according to one of claims 1 to 12.

## Patentansprüche

1. Verfahren zum Authentifizieren der Freigabe von Daten an einen Vorrichtungstreiber (4020) in einer elektronischen Vorrichtung (1100), die ein Haupt-Anzeigefeld (1110) aufweist, umfassend:
Speichern von Authentifizierungsanmeldedaten, die auf der elektronischen Vorrichtung (1100) ausgeführte Software-Anwendungen identifizieren, die für einen Anzeigefunktionsmanager (1135) genehmigt sind;
Empfangen, vonseiten einer der auf der elektronischen Vorrichtung (1100) ausgeführten Software-Anwendungen, einer Anfrage nach einem Senden von Daten zum Anzeigefunktionsmanager (1135), der einen Zugriff auf ein Extra-Anzeigefeld (1170) verwaltet, das außerhalb des Haupt-Anzeigefelds (1110) definiert ist, wobei die Anfrage das Abfragen von Anmeldedaten von der einen Software-Anwendung umfasst;
Verifizieren der Anfrageanmeldedaten für die eine Software-Anwendung in Bezug auf das Extra-Anzeigefeld (1170) gegen die gespeicherten Authentifizierungsanmeldedaten;
wenn die Anfrageanmeidedaten verifiziert sind, Genehmigen der Freigabe der Daten an den Vorrichtungstreiber (4020);
Empfangen einer Unterbrechungsereignismeldung in Bezug auf das Extra-Anzeigefeld (1170) und die eine Software-Anwendung;
Ignorieren einer weiteren Datenabfrage von der authentifizierten Software-Anwendung;
Speichern eines Zustands, der mit der authentifizierten Software-Anvuendung assoziiert ist; und
Rücknahme der Authentifizierung der zuvor authentifizierten Software-Anwendung; und
ferner umfassend:
Empfangen einer Fortsetzungsereignismeldung in Bezug auf das Extra-Anzeigefeldbildschirmereignis;
Wiederherstellen des gespeicherten Zustands; erneutes Authentifizieren der einen Software-Anwendung; und
Akzeptieren einer zusätzlichen Datenabfrage von der einen Software-Anwendung.

2. Verfahren nach Anspruch 1, wobei die Anfrage an einem Plattformverwaltungsmodul (1130) der elektronischen Vorrichtung (1100) empfangen wird, wobei das Plattformverwaltungsmodul (1130) und der Anzeigefunktionsmanager (1135) als Torwächter für das Extra-Anzeigefeld (1170) dienen, und wobei die Verifizierung der Anfrageanmeldedaten am Plattformverwaltungsmodul (1130) durchgeführt wird, wobei das Verfahren ferner das Freigeben der Daten vom Anzeigefunktionsmanager (1135) umfasst.

3. Verfahren nach Anspruch 1, ferner umfassend:
Empfangen der Daten, die ein Bild umfassen, am Anzeigefunktionsmanager (1135), und wobei das Genehmigen der Freigabe der Daten an den Anzeigefunktionsmanager (1135) ferner das Anzeigen des Bildes im Extra-Anzeigefeld (1170) umfasst; oder
Empfangen der Daten, die Text oder Videoinhalt umfassen, am Anzeigefunktionsmanager (1135), und wobei das Genehmigen der Freigabe der Daten an den Anzeigefunktionsmanager (1135) ferner das Anzeigen eines Bildes aus dem Text- oder Videoinhalt im Extra-Anzeigefeld (1170) umfasst; oder Empfangen der Daten, die mehrere Koordinaten umfassen, die anzeigen, wo die Daten gezeichnet werden sollen, am Anzeigefunktionsmanager (1135).

4. Verfahren nach Anspruch 1, wobei:
die eine Software-Anwendung in einem Benutzerbereich im Speicher (1200) der elektronischen Vorrichtung (1100) ausgeführt wird; oder
die eine Software-Anwendung außerhalb eines Benutzerbereichs im Speicher (1200) der elektronischen Vorrichtung (1100) ausgeführt wird.

5. Verfahren nach einem der Ansprüche 1 bis 4, wobei:
die Daten eine Meldung vom Betriebssystem der elektronischen Vorrichtung (1180) umfassen; oder
die Daten eine Meldung in Bezug auf eine Nachricht umfassen, die über ein Netzschnittstellenmodul (1210) der elektronischen Vorrichtung (1100) empfangen worden ist.

6. Verfahren nach einem der Ansprüche 1 bis 4, wobei die Anfrage von einer Interprozesskommunikations-(IPC-) Komponente empfangen wird, die in einem Kernbereich im Speicher (1200) der elektronischen Vorrichtung (1100) ausgeführt wird.

7. Verfahren nach Anspruch 1, wobei:
das Extra-Anzeigefeld (1170A) ein elektronischer Papieranzeige-, ein bistabiler Anzeige-, ein herkömmlicher Farbanzeige- oder ein transparenter Anzeigeteil der elektronischen Vorrichtung (1100) ist und das Haupt-Anzeigefeld (1110) ein elektronischer Papieranzeige-, ein bistabiler Anzeige-, ein herkömmlicher Farbanzeige- oder ein transparenter Anzeigeteil der elektronischen Vorrichtung (1100) ist; oder
das Extra-Anzeigefeld (1170B) ein elektronischer Papieranzeige-, ein bistabiler Anzeige-, ein herkömmlicher Farbanzeige- oder ein transparenter Anzeigeteil der elektronischen Vorrichtung (1100) ist und das Haupt-Anzeigefeld (1110) ein elektronischer Papieranzeige-, ein bistabiler Anzeige-, ein herkömmlicher Farbanzeige- oder ein transparenter Anzeigeteil der elektronischen Vorrichtung (1100) ist.

8. Verfahren nach Anspruch 7, wobei:
das Extra-Anzeigefeld (1170) nicht auf einer Fläche der elektronischen Vorrichtung (1100) liegt, die das Haupt-Anzeigefeld (1110) umfasst; oder
die elektronische Vorrichtung (1100) eine voll berührungsempfindliche (Full Touch) Vorrichtung ist.

9. Verfahren nach einem der Ansprüche 1 bis 4 und 7, ferner das Verbessern des Bildes in ein verbessertes gerastertes Bild unter Berücksichügung der physischen Eigenschaften des Extra-Anzeigefelds (1170) umfassend, wobei die Verbesserung ein physisches Ausschnittsteilstück als physische Eigenschaften des Extra-Anzeigefelds (1170) berücksichtigt.

10. Verfahren nach einem der Ansprüche 1 bis 4 und 7, wobei:
die Anfrage ein Bild umfasst; oder
die Anfrage auf ein Bild an einem Speicherort in der elektronischen Vorrichtung (1100) Bezug nimmt.

11. Verfahren nach einem der Ansprüche 1 bis 4 und 7, ferner das Empfangen einer Registrierungsanfrage in Bezug auf das Extra-Anzeigefeld (1170) von der einen Software-Anwendung und das Authentifizieren der einen Software-Anwendung vor der Genehmigung der Registrierungsanfrage umfassend, wobei die Registrierungsanfrage eine Paketkennung (UID) und eine Prozesskennung (PID) umfasst, wobei die Authentifizierungsanmeldedaten die UID und die PID der einen Software-Anwendung umfassen, wobei die Verifizierung der Anfrageanmeldedaten für die eine Software-Anwendung ferner das Vergleichen einer empfangenen UID und PID mit der gespeicherten UID und PID umfasst.

12. Verfahren nach einem der Ansprüche 1 bis 4 und 7, ferner umfassend:
Empfangen einer Berührungsereignismeldung in Bezug auf das Extra-Anzeigefeld (1170) und Weiterleiten der Berührungsereignismeldung an die authentifizierte Software-Anwendung; oder
wenn die Anfrageanmeldedaten nicht verifiziert worden sind, Ignorieren der Anfrage.

13. Elektronische Vorrichtung (1100), umfassend:
ein Haupt-Anzeigefeld (1110);
ein Speichermodul (1200);
ein Prozessormodul (1140) zum:
Ausführen eines Anzeigefunktionsmanagers (1135), der einen Zugriff auf ein Extra-Anzeigefeld (1170), das außerhalb des Haupt-Anzeigefelds (1110) definiert ist, verwaltet;
Speichern von Authentifizierungsanmeldedaten, die auf dem Prozessormodul ausgeführte Software-Anwendungen identifizieren, die für den Anzeigefunktionsmanager (1135) genehmigt sind, im Speichermodul (1200);
Empfangen einer Anfrage von einer der auf dem Prozessormodul (1140) ausgeführten Software-Anwendungen nach Senden von Daten an den Anzeigefunktionsmanager (1135), wobei die Anfrage Anfrageanmeldedaten von der einen Software-Anwendung umfasst;
Verifizieren der Anfrageanmeldedaten für die eine Software-Anwendung in Bezug auf das Extra-Anzeigefeld (1170) gegen die gespeicherten Authentifizierungsanmeldedaten;
wenn die Anfrageanmeldedaten verifiziert worden sind, Genehmigen der Freigabe der Daten an den Vorrichtungstreiber (4020);
Empfangen einer Unterbrechungsereignismeldung in Bezug auf das Extra-Anzeigefeld (1170) und die eine Software-Anwendung;
Ignorieren einer weiteren Datenabfrage von der authentifizierten Software-Anwendung;
Speichern eines Zustands, der mit der authentifizierten Software-Anwendung assoziiert ist; und
Rücknahme der Authentifizierung der zuvor authentifizierten Software-Anwendung; und
ferner umfassend:
Empfangen einer Fortsetzungsereignismeldung in Bezug auf das Extra-Anzeigefeldbildschirmereignis;
Wiederherstellen des gespeicherten Zustands; erneutes Authentifizieren der einen Software-Anwendung; und
Akzeptieren einer zusätzlichen Datenanforderung von der einen Software-Anwendung.

14. Elektronische Vorrichtung (1100) nach Anspruch 13, die ferner dafür ausgelegt ist, ein Verfahren nach einem der Ansprüche 1 bis 12 durchzuführen.

## Revendications

1. Procédé d'authentification d'une délivrance de données vers un pilote de dispositif (4020) dans un dispositif électronique (1100) ayant une surface d'affichage principale (1110), comprenant :
le stockage d'informations d'authentification identifiant des applications de logiciel, l'exécution sur le dispositif électronique (1100) celles qui sont autorisées pour un gestionnaire de la fonction d'affichage (1135) ;
la réception d'une demande, à partir de l'une des applications de logiciel exécutant sur le dispositif électronique (1100), pour l'envoi de données vers le gestionnaire de la fonction d'affichage (1135) qui gère l'accès vers une surface d'affichage extra (1170) définie à l'extérieur de la surface d'affichage principale (1110), où la demande comprend une demande d'informations à partir de l'application de logiciel donnée ;
la vérification des informations de demande pour l'application de logiciel donnée en ce qui concerne la surface d'affichage extra (1170) par rapport aux informations d'authentification stockées ;
lorsque les informations de demande sont vérifiées, l'autorisation de la délivrance des données vers le pilote de dispositif (4020) ;
la réception d'une notification d'un évènement de pause en relation avec la surface d'affichage extra (1170) et l'application de logiciel donnée ;
l'ignorance d'une demande de données ultérieure à partir de l'application de logiciel authentifiée ;
la sauvegarde d'un état associé avec l'application de logiciel authentifiée ; et
la désauthentification de l'application de logiciel authentifiée auparavant ; et
comprenant en outre :
la réception d'une notification d'un évènement de relance en relation avec l'événement de l'écran de la surface d'affichage extra ;
la restauration de l'état sauvegardé ; la réauthentification de l'application de logiciel donnée ; et
l'acceptation d'une demande de données additionnelle à partir de l'application de logiciel donnée.

2. Procédé selon la revendication 1, dans lequel la demande est reçue au niveau d'un module de gestion de plateforme (1130) du dispositif électronique (1100), le module de gestion de plateforme (1130) et le gestionnaire de fonction d'affichage (1135) agissant comme un portier pour la surface d'affichage extra (1170), et où la vérification des informations de demande est effectuée au niveau du module de gestion de plateforme (1130), le procédé comprenant en outre la délivrance de données à partir du gestionnaire de fonction d'affichage (1135).

3. Procédé selon la revendication 1, comprenant en outre :
la réception des données, au niveau du gestionnaire de fonction d'affichage (1135), qui comprennent une image et où l'autorisation de la délivrance des données vers le gestionnaire de fonction d'affichage (1135) comprend en outre l'affichage de l'image sur la surface d'affichage extra (1170) ; ou
la réception des données, au niveau du gestionnaire de fonction d'affichage (1135), qui comprennent du texte ou un contenu vidéo et où l'autorisation de la délivrance des données vers le gestionnaire de fonction d'affichage (1135) comprend en outre l'affichage d'une image à partir du texte ou du contenu vidéo sur la surface d'affichage extra (1170) ; ou
la réception des données, au niveau du gestionnaire de fonction d'affichage (1135) qui comprennent une pluralité de coordonnées indiquant où les données devraient être dépeintes.

4. Procédé selon la revendication 1, dans lequel :
l'application de logiciel donnée est exécutée dans un espace d'utilisateur dans la mémoire (1200) du dispositif électronique (1100) ; ou
l'application de logiciel donnée est exécutée à l'extérieur d'un espace d'utilisateur dans la mémoire (1200) du dispositif électronique (1100).

5. Procédé selon l'une quelconque des revendications 1 à 4, dans lequel :
les données comprennent une notification provenant du système (1180) faisant fonctionner le dispositif électronique ; ou
les données comprennent une notification en relation avec un message reçu via un module d'interface de réseau (12010) du dispositif électronique (1100).

6. Procédé selon l'une quelconque des revendications 1 à 4, dans lequel la demande est reçue à partir d'un composant de communication interprocessus (IPC) s'exécutant dans un espace de noyau dans la mémoire (1200) du dispositif électronique (1100).

7. Procédé selon la revendication 1, dans lequel :
la surface d'affichage extra (1170A) est un affichage sur papier électronique, un affichage bistable, un affichage en couleurs conventionnel ou une partie d'affichage transparente du dispositif électronique (1100) et la surface d'affichage principale (1110) est un affichage sur papier électronique, un affichage bistable, un affichage en couleurs conventionnel ou un affichage transparent rattaché au dispositif électronique (1100) ; ou
la surface d'affichage extra (1170B) est un affichage sur papier électronique, un affichage bistable, un affichage en couleurs conventionnel ou un affichage transparente rattaché au dispositif électronique (1100) et la surface d'affichage principale (1110) est un affichage sur papier électronique, un affichage bistable, un affichage en couleurs conventionnel ou une partie d'affichage transparente du dispositif électronique (1100).

8. Procédé selon la revendication 7, dans lequel :
la surface d'affichage extra (1170) n'est pas située sur une face du dispositif électronique (1100) qui comprend la surface d'affichage principale (1110) ; ou le dispositif électronique (1100) est un dispositif entièrement tactile.

9. Procédé selon l'une quelconque des revendications 1 à 4 et 7, comprenant en outre un agrandissement de l'image en une image pixellisée agrandie en prenant en compte des propriétés physiques de la surface d'affichage extra (1170), où l'agrandissement prend en compte une section découpée physiquement en tant que propriété physique de la surface d'affichage extra (1170).

10. Procédé selon l'une quelconque des revendications 1 à 4 et 7, dans lequel :
la demande comprend une image ; ou
la demande fait référence à une image à partir d'une localisation de mémoire dans le dispositif électronique (1100).

11. Procédé selon l'une quelconque des revendications 1 à 4 et 7, comprenant en outre la réception d'une demande d'enregistrement, en relation avec la surface d'affichage extra (1170), à partir de l'application de logiciel donnée et l'authentification de l'application de logiciel donnée avant l'accord de la demande d'enregistrement, où la demande d'enregistrement comprend un identifiant de paquet (UID) et un identifiant de processus (PID), les informations d'identification comprenant l'UID et le PID de l'application de logiciel donnée, où une vérification des informations de demande pour l'application de logiciel donnée comprend en outre la comparaison des UID et PID reçus avec les UID et PID stockés.

12. Procédé selon l'une quelconque des revendications 1 à 4 et 7, comprenant en outre :
la réception d'une notification d'un évènement de toucher en relation avec la surface d'affichage extra (1170) et la transmission de la notification de l'événement de toucher à l'application de logiciel authentifiée ; ou
lorsque les informations de demande ne sont pas vérifiées, l'ignorance de la demande.

13. Dispositif électronique (1100) comprenant :
une surface d'affichage principale (1110.) ;
un module de mémoire (1200) ;
un module de processeur (1140) pour :
exécuter un gestionnaire de la fonction d'affichage (1135) qui gère l'accès à une surface d'affichage extra (1170) définie à l'extérieur de la surface d'affichage principale (1110) ;
stocker dans le module de mémoire (1200) des informations d'authentification identifiant des applications de logiciel, exécuter sur le module de processeur celles qui sont autorisées pour le gestionnaire de la fonction d'affichage (1135) ;
recevoir une demande à partir de l'une des applications de logiciel s'exécutant sur le module de processeur (1140) pour l'envoi de données vers le gestionnaire de la fonction d'affichage (1135), où la demande comprend des informations de demande provenant de l'application de logiciel donnée ;
vérifier les informations de demande pour l'application de logiciel donnée en relation avec la surface d'affichage extra (1170) par rapport aux informations d'authentification stockées ;
lorsque les informations de demande sont vérifiées, autoriser la délivrance des données vers le pilote de dispositif (4020) ;
recevoir une notification d'un évènement de pause en relation avec la surface d'affichage extra (1170) et l'application de logiciel donnée ;
ignorer une nouvelle demande de données provenant de l'application de logiciel authentifiée ;
sauvegarder un état associé avec l'application de logiciel authentifiée ; et
désauthentifier l'application de logiciel authentifiée auparavant ; et
comprenant en outre :
la réception d'une notification d'un événement de relance en relation avec l'évènement d'écran de la surface d'affichage extra ;
la restauration de l'état sauvegardé ; la réauthentification de l'application de logiciel donnée ; et
l'acceptation d'une demande de données additionnelle provenant de l'application de logiciel donnée.

14. Dispositif électronique (1100) selon la revendication 13, configuré en outre pour réaliser un procédé selon l'une des revendications 1 à 12.
